(19) Europäisches Patentamt
European Patent Office
Office européen des brevets

(11) Publication number: 0 233 752
A2

# (12) EUROPEAN PATENT APPLICATION

(21) Application number: 87301189.4

(22) Date of filing: 11.02.87

(51) Int. Cl.$^3$: C 08 L 83/07
C 09 D 3/82

(30) Priority: 14.02.86 JP 30117/86

(43) Date of publication of application:
26.08.87 Bulletin 87/35

(84) Designated Contracting States:
DE FR GB

(71) Applicant: Shin-Etsu Chemical Co., Ltd.
6-1, Ohtemachi 2-chome
Chiyoda-ku Tokyo 100(JP)

(72) Inventor: Aoki, Hisashi
19-1, Isobe 3-chome
Annaka-shi Gunma-ken(JP)

(74) Representative: Bizley, Richard Edward et al,
BOULT, WADE & TENNANT 27 Furnival Street
London EC4A 1PQ(GB)

## (54) A method for the preparation of a cured organopolysiloxane composition.

(57) The invention provides an efficient method for the preparation of a cured organopolysiloxane composition by irradiating, with electron beams, an organopolysiloxane composition comprising an organopolysiloxane having, in a molecule, at least one organosiloxane units having an acrylic group such as 3-acryloxypropyl group and an organohydrogenpolysiloxane. The method is useful for the preparation of release paper for the temporary protection of a sticky surface such as a pressure-sensitive adhesive tape and the release paper prepared according to the inventive method is advantageous in respect of the peeling resistance and retention of adhesiveness in comparison with conventional products.

EP 0 233 752 A2

 0233752

# A METHOD FOR THE PREPARATION OF A CURED ORGANOPOLYSILOXANE COMPOSITION

The present invention relates to a method for the preparation of a cured organopolysiloxane composition or, more particularly, to a method for the preparation of a cured organopolysiloxane composition useful for forming a coating layer on the surface of various kinds of substrate materials such as plastics by irradiation with electron means in a relatively low dose.

Various types of electron beam-curable organopolysiloxane compositions are known in the prior art including, for example, those comprising an organopolysiloxane having ethylenically unsaturated organic groups and a photosensitizer as disclosed in U.S. Patent 3,726,710 and those comprising an organopolysiloxane having vinyl groups, organohydrogenpolysiloxane having hydrogen atoms directly bonded to the silicon atoms and photosensitizer as taught in British Patent 1,433,461. The composition of the former type, however, has a disadvantage that curing thereof must be performed by using a relatively expensive apparatus which generates electron beams of very high energy. The composition of the latter type, on the other hand, is industrially impracticable because the curing speed thereof is too low for industrial purposes.

Various attempts and proposals have been made hitherto to overcome the above described problems and disadvantages of the electron beam-curable organopolysiloxane compositions in the prior art. For example, Japanese Patent Publication 57-57096 teaches an organopolysiloxane composition comprising an organopolysiloxane

having, in a molecule, at least one acryloxy or methacryloxy group, a low-molecular organosiloxane polyacrylate and a photosensitizer. Japanese Patent Publication 58-53656 describes an organopolysiloxane composition of which the organopolysiloxane as the principal ingredient is a reaction product obtained by the reaction of an organopolysiloxane having chlorine atoms with pentaerithritol (meth)acrylate. Though satisfactory in respect of the curability by the irradiation with electron beams, these organopolysiloxane compositions are disadvantageous because of the poor surface releasability of the cured film thereof, in particular, when the pressure-sensitive adhesive is an acrylic one. Japanese Patent Kokai 59-6222 teaches an organopolysiloxane composition of which the organopolysiloxane as the principal ingredient has acryloxyalkyl groups bonded to the siloxane chain through -Si-C- linkages and silicon-bonded hydrogen atoms in one and the same molecule. When a composition of this type is used for forming a surface release coating, the crosslinking reaction is sometimes incomplete since the two types of the functional groups pertaining to the crosslinking reaction are contained in the same molecule so that changes of the peeling resistance with time are more or less unavoidable and the pressure-sensitive adhesive tape bonded to the surface can no longer be peeled off from the surface as a result of aging after bonding.

The method of the present invention for the preparation of a cured organopolysiloxane composition, comprises:

irradiating, with an electron beam, an organopolysiloxane composition comprising

(a) 100 parts by weight of an organopolysiloxane having, in a molecule, at least one organosiloxane units represented by the general unit formula $AR^1{}_nSiO_{(3-n)/2}$, in which A is an acrylic or methacrylic functional organic group having from 2 to 20 carbon atoms, $R^1$ is a monovalent hydrocarbon group having from 1 to 12 carbon atoms and n is zero, 1 or 2,

and

(b) from 0.5 to 50 parts by weight of an organohydrogenpolysiloxane having, in a molecule, at least one hydrogen atom directly bonded to the silicon atom.

The above composition is included in the present invention.

As will be understood from the above given summary of the invention, the most characteristic feature of the inventive method consists in the unique formulation of the organopolysiloxane composition subjected to the irradiation with an electron beam, by virtue of which the composition can readily and completely be cured by the electron beam irradiation in a relatively small dose and the thus obtained cured film of the composition is very stable relative to the surface releasability or peeling resistance of adhesive tape bonded thereto over time. Namely, the organopolysiloxane as the principal ingredient of the organopolysiloxane composition has (meth)acrylic functional organic groups and the electron beam irradiation of the same in the presence of an organohydrogenpolysiloxane causes the crosslinking reaction between the (meth)acrylic functional groups in the former component and the silicon-bonded hydrogen atoms in the latter component to cure the composition completely in a relatively small dose. The thus cured organopolysiloxane composition has excellent surface releasability and the peeling resistance of an adhesive material off the surface of the cured composition can readily be controlled by modifying the content of the (meth)acrylic functional

groups in the organopolysiloxane.

The component (a) comprised in the organopolysiloxane composition used in the inventive method is an organopolysiloxane having, in a molecule, at least one organosiloxane unit represented by the above given general unit formula $AR^1_nSiO_{(3-n)/2}$. The symbol A in the formula denotes an acrylic functional organic group having from 2 to 20 carbon atoms which, for example, may be derived from a hydroxy-functional (meth)acrylate selected from the class consisting of 2-hydroxyethyl acrylate, hydroxypropyl acrylate, hydroxypropyl methacrylate, hydroxybutyl acrylate, 2-hydroxyethyl acrylamide, diethylene glycol monoacrylate, pentaerithritol monoacrylate, pentaerithritol diacrylate, pentaerithritol triacrylate, pentaerithritol trimethacrylate and the like or, for example, may be derived from a (meth)acryloxy alkyl group such as 3-acryloxypropyl and 3-methacryloxypropyl groups. Particularly useful (meth)acrylic functional groups include those expressed by the following formulas: $-OCOCH=CH_2$; $-OCOC(CH_3)=CH_2$; $-OC_2H_4OCOCH=CH_2$; $-OCH_2C(CH_2OCOCH=CH_2)_3$; $-C_3H_6OCOCH=CH_2$; and $-C_3H_6OCOC(CH_3)=CH_2$, of which the acrylic ones are pfeferred to the methacrylic ones. Especially preferred are $-OC_2H_4OCOCH=CH_2$, $-OCH_2C(CH_2OCOCH=CH_2)_3$ and $-C_3H_6OCOCH=CH_2$. The symbol $R^1$ denotes a monovalent hydrocarbon group having from 1 to 12 carbon atoms, for example alkyl groups, e.g. methyl, ethyl, propyl and butyl groups, alkenyl groups, e.g. vinyl and allyl groups, aryl groups, e.g. phenyl and tolyl groups, and cycloalkyl groups, e.g. cyclohexyl group. Substituted monovalent hydrocarbon groups obtained by replacing a part or all of the hydrogen

atoms in the above named hydrocarbon groups with halogen atoms, cyano groups and the like are also suitable including chloromethyl, 3,3,3-trifluoropropyl and 2-cyanoethyl groups and other haloalkyl and cyanoalkyl groups. The subscript n is zero, 1 or 2.

The organopolysiloxane as the component (a) may be composed, in addition to the organosiloxane unit or units

having the above defined (meth)acrylic functional group, of at least one kind or combination of dimethyl siloxane units, methyl siloxane units, diphenyl siloxane units, methyl phenyl siloxane units, methyl vinyl siloxane units, vinyl siloxane units, trimethyl siloxy units, dimethyl phenyl siloxy units, methyl diphenyl siloxy units and the like. The organopolysiloxane should generally have a viscosity in the range from 30 to 100,000 centipoise or, preferably, from 500 to 20,000 centipoise at 25 °C in consideration of the workability when the composition is applied to the substrate surface without using a solvent for dilution.

Although the essential requirement for the organopolysiloxane is that the organopolysiloxane should contain at least one organosiloxane unit having the (meth)acrylic functional unit as defined above, it is preferable that the mole fraction of such functional units in the overall siloxane units of the organopolysiloxane should be in the range from 0.1 to 30% by moles. When the molar content of the functional siloxane units is too small, the organopolysiloxane is poorly curable and can be cured only by the irradiation with a large dose of electron beams while the cured composition is far from satisfactory in respect of the characteristics of surface peelability. When the molar content of the functional siloxane units is too large in the organopolysiloxane, on the other hand, difficulties are caused in obtaining small peeling resistance although the composition may have excellent curability.

The structural formulas given below, in which the symbols Me, Vi and Ph denote methyl, vinyl and phenyl groups, respectively, are illustrative of several of the organopolysiloxanes suitable as the component (a):

$ViCO-O-C_3H_6-SiMe_2-O-(-SiMe_2-O-)_{98}SiMe_2-C_3H_6-O-COVi$;

$ViCO-O-C_2H_4-SiMe_2-O-(-SiPh_2-O-)_9(-SiMe_2-O-)_{280}$
$-[-SiMe(-OC_2H_4-O-COVi)-O-]_9-SiMe_2-O-C_2H_4-O-COVi$;

$(ViCO\text{-}O\text{-}CH_2)_3CCH_2\text{-}O\text{-}SiMe_2\text{-}O\text{-}(SiMe_2\text{-}O)_{198}\text{-}SiMe_2\text{-}O\text{-}CH_2C(CH_2\text{-}O\text{-}COVi)_3$; and

$ViMe_2Si\text{-}O\text{-}(SiMe(C_3H_6\text{-}O\text{-}COVi)\text{-}O)_{15}\text{-}(SiMe_2\text{-}O)_{483}\text{-}SiMe_2Vi$.

The component (b) comprised in the organopolysiloxane composition in combination with the above described component (a) is an organohydrogenpolysiloxane having, in a molecule, at least one hydrogen atom directly bonded to the silicon atom. The organohydrogenpolysiloxane may, for example, be composed of one kind or more of the siloxane units selected from the class consisting of dimethyl siloxane units, methyl siloxane units, vinyl methyl siloxane units, diphenyl siloxane units, methyl phenyl siloxane units, trimethyl siloxy units, dimethyl phenyl siloxy units, methyl diphenyl siloxy units and the like. The molecular structure of the organophydrogenpolysiloxane is not particularly limitative including linear, cyclic and branched chain-like ones.

Though not particularly limitative, the organohydrogenpolysiloxane should generally have a viscosity in the range from 10 to 500 centipoise at 25 °C. The amount of the organohydrogenpolysiloxane as the component (b) in the organopolysiloxane composition should be in the range from 0.5 to 50 parts by weight or, preferably, from 1.0 to 10 parts by weight per 100 parts by weight of the component (a). In particular, the amount of the component (b) should generally be such that the molar ratio of the (meth)acrylic functional groups in the component (a) to the silicon-bonded hydrogen atoms in the component (b) is in the range from 1:100 to 100:1 or, preferably, from 1:2 to 2:1 in the organopolysiloxane composition. When the amount of the component (b) is too small, the curability of the composition would be insufficient by the electron beam irradiation and the cured composition may be poor in the peelability characteristics. The curability of the composition is also insufficient and

the cured composition thereof would be unsatisfactory in respect of adhesiveness retention of an adhesive tape peeled off from the surface of the cured composition.

The organopolysiloxane composition used in the inventive method can be prepared by merely blending the above described components (a) and (b) into a homogeneous mixture each in a calculated and weighed amount. It is of course optional that the organopolysiloxane composition is admixed according to need with various kinds of additives such as photosensitizers, solvents as a diluent, antioxidants and the like. Further, the organopolysiloxane composition may be admixed with a conventional diorganopolysiloxane, inorganic filler, e.g. finely divided silica powder, heat-resistance improver, e.g. ceric oxide, coloring agent and the like each in a limited amount.

The invention also comprises a method of providing a substrate with a release surface for adhesive by coating a substrate surface with the above described organopolysiloxane composition and irradiating the coating layer on the surface with an electron beam to cure the composition. Advantageously, the organopolysiloxane composition can be fully cured by the electron beam irradiation in a relatively small dose of, for example, 5 Mrads or smaller and the surface of the cured coating layer exhibits excellent peelability characteristics. Therefore, the method of the present invention is useful for the preparation of release paper or sheet for temporary protection of adhesive surfaces. The method is also useful for forming a coating layer on the surface of various substrate materials in protective, decorative and water-repellent purposes.

The electron beams for the irradiation of the organopolysiloxane composition can be generated using an electron accelerator which is not limited to a particular

type but may be any of conventional ones including the types of van de Graaff, resonant transformer, dynamitron and linear accelerator. The electron accelerator should generate electron beams having an energy of 50 to 1000 keV or, preferably, 100 to 300 keV. The electron beam irradiation of the coating layer of the organopolysiloxane composition should be performed either by scanning with a single flux of electron beams at a high velocity or with a curtain-like shower of electron beams continuously emitted from a linear filament. The organopolysiloxane composition can be fully cured by the electron beam irradiation to give a dose in the range from 0.1 to 10 Mrads. The electron beam irradiation should be performed, preferably, in an atmosphere of which the concentration of oxygen is 1000 ppm by volume or lower.

In the following, the method of the present invention is illustrated in more detail by way of examples, in which the term "parts" always refers to "parts by weight" and the values of viscosity are all those obtained by the measurement at 25 °C. In the examples, the performance of the cured organopolysiloxane composition was evaluated as a surface-releasing film in terms of the peeling resistance and the retention of adhesiveness each determined in the following manner.

Peeling resistance: the surface of a substrate provided with a coating layer of the organopolysiloxane cured by the electron beam irradiation was coated with a pressure-sensitive adhesive and, after heating at 100 °C for 3 minutes, a sheet of paper was applied and bonded thereto. After standing as such for 3 hours at 25 °C, the covering paper was peeled off the substrate surface by pulling in a 180° direction on an automatic tensile tester and the resistance against peeling was recorded and given in g/5 cm.

Retention of adhesiveness: a pressure-sensitive adhesive tape (Nitto Polyester Tape 31B, a product by Nitto Denko Co.) was applied and bonded to the surface of a coating layer of the cured organopolysiloxane composition formed on a substrate and kept standing for 20 hours at 70 °C under a load of 20 $g/cm^2$. The adhesive tape was then peeled off and again applied and bonded to the well-polished surface of a stainless steel plate. The adhesive tape on the stainless steel plate was peeled off to determine the peeling resistance and the value was compared with and given in percentage relative to the value obtained by the same test using a fresh adhesive tape.

Examples 1 to 4 and Comparative Examples 1 and 2.

Four electron beam-curable organopolysiloxane compositions, referred to as the compositions I, II, III and IV hereinbelow, were prepared each by uniformly blending 100 parts of an acryloxyalkyl-containing diorganopolysiloxane having a viscosity of 1500 centipoise and a molecular structure composed of 95% by moles of dimethyl siloxane units and 5% by moles of methyl 3-acryloxypropyl siloxane units and terminated at each molecular chain end with a trimethyl silyl group with 0.5, 1, 3 or 5 parts, respectively, of a methyl hydrogen polysiloxane having a viscosity of 20 centipoise and a molecular structure terminated at each molecular chain end with a trimethyl silyl group and containing 1.56 moles/100 g of the silicon-bonded hydrogen atoms (Examples 1 to 4).

In Comparative Example 1, the acryloxyalkyl-containing diorganopolysiloxane as such without admixture of the methyl hydrogen polysiloxane, referred to as the composition V hereinbelow, was used in place of the above prepared compositions I to IV. In Comparative Example 2, the formulation of the composition, referred to as the

composition VI hereinbelow, was the same as in the compositions I to IV except that the amount of the methyl hydrogen polysiloxane was decreased to 0.2 part.

Each of the compositions I to VI was applied to the surface of a polyethylene-laminated paper to form a uniform coating layer in a coating amount of 0.8 $g/m^2$ and the coated surface was irradiated in an atmosphere containing 150 ppm by volume of oxygen with electron beams coming from a low-energy electron accelerator (manufactured by Energy Science Co.) in a dose of 2 to 5 Mrads to cure the organopolysiloxane composition. The curability of the organopolysiloxane composition was as shown in the table below.

Each of the specimens of polyethylene-laminated paper processed in the above described manner with an irradiation dose of 3 Mrads was subjected to the tests of the peeling resistance and retention of adhesiveness according to the methods described before using three kinds of pressure-sensitive adhesives (BPS-2411, BPS-5127 and BPW-3110H, products by Toyo Ink Manufacturing Co.) to give the results shown in Table given below. The three pressure-sensitive adhesives above mentioned were of the types of a rubber-based solution, acrylic resin-based solution and acrylic resin-based aqueous emulsion, respectively.

Examples 5 to 8 and Comparative Example 3.

Electron beam-curable organopolysiloxane compositions, referred to as the compositions VII, VIII, IX and X, were prepared in Examples 5 to 8, respectively, each by uniformly blending 100 parts of an acryloxy-containing organopolysiloxane having a viscosity of 600 centipoise and a molecular structure composed of 97% by moles of dimethyl siloxane units and 3% by moles of

the siloxane units expressed by the formula $(CH_2=CHCOOCH_2)_3CCH_2OSiMeO$ and terminated at each molecular chain end with a trimethyl silyl group with 1, 3, 5 or 10 parts, respectively, of the same methyl hydrogen polysiloxane as used in the preceding examples. In Comparative Example 3, the acryloxy-containing organopolysiloxane as such, which is referred to as the composition XI hereinbelow, was used without admixture of the methyl hydrogen polysiloxane in place of the compositions VII to X.

Each of the compositions VII to XI was subjected to the same tests as in the preceding examples to give the results shown in the table below, of which the curability of the composition was examined by the electron beam irradiation in a dose of 1, 2, 3 or 5 Mrads.

Examples 9 to 11 and Comparative Example 4.

Electron beam-curable compositions, referred to as the compositions XII, XIII and XIV hereinbelow, were prepared in Examples 9 to 11, respectively, each by uniformly blending 100 parts of the same acryloxy-containing organopolysiloxane as used in the preceding examples with 10, 30 or 50 parts, respectively, of a methyl hydrogen polysiloxane having a viscosity of 800 centipoise and a molecular structure composed of 90% by moles of dimethyl siloxane units and 10% by moles of methyl hydrogen siloxane units and terminated at each molecular chain end with a trimethyl silyl group. The formulation of the organopolysiloxane composition used in Comparative Example 4, which is referred to as the composition XV hereinbelow, was the same as in the compositions XII to XIV except that the amount of the methyl hydrogen polysiloxane was increased to 80 parts.

Each of the compositions XII to XV was subjected to the same tests as in the preceding examples to give

the results shown in the table given below.

Example 12 and Comparative Example 5.

In Example 12, an electron beam-curable organopolysiloxane composition, referred to as the composition XVI hereinbelow, was prepared by uniformly blending 100 parts of an acryloxy-containing organopolysiloxane having a viscosity of 2800 centipoise and a molecular structure composed of 60% by moles of dimethyl siloxane units, 30% by moles of phenyl siloxane units and 10% by moles of methyl 3-acryloxypropyl siloxane units and terminated at each molecular chain end with a dimethyl methoxy silyl group corresponding to a content of the methoxy groups of 5% by weight with 5 parts of a methyl phenyl hydrogen polysiloxane having a viscosity of 350 centipoise and a molecular structure composed of 30% by moles of diphenyl siloxane units and 70% by moles of methyl hydrogen siloxane units and terminated at each molecular chain end with a trimethyl silyl group. In Comparative Example 5, the acryloxy-containing organopolysiloxane as such, which is referred to as the composition XVII hereinbelow, was used in place of the above prepared composition XVII without admixture of the methyl phenyl hydrogen polysiloxane.

Each of the compositions XVI and XVII was subjected to the same tests as in the preceding examples to find that the composition XVI could be fully cured by the electron beam irradiation in a dose of 1 Mrad to give a cured surface film exhibiting a peeling resistance of 250 g/5 cm against the pressure-sensitive adhesive BPS-2411 while the composition XVII could be cured by the electron beam irradiation of 2 Mrads or more to give a cured surface film from which the covering paper could hardly be peeled off in the peeling resistance test.

Table

| Composition No. | | I | II | III | IV | V | VI | VII | VIII | IX | X | XI | XII | XIII | XIV | XV |
|---|---|---|---|---|---|---|---|---|---|---|---|---|---|---|---|---|
| Dose of electron beams, Mrads | 1 | | | | | | | D | C | C | C | D | D | D | D | D |
| | 2 | D | C | B | A | D | D | C | B | A | A | C | B | B | C | D |
| | 3 | C | B | A | A | C | C | A | A | A | A | B | A | A | A | C |
| | 4 | B | A | A | A | C | C | | | | | | | | | |
| | 5 | A | A | A | A | B | A | A | A | A | A | A | A | A | A | B |
| Peeling resistance, g/5 cm | BPS 2411 | 120 | 88 | 73 | 72 | 134 | 131 | 92 | 55 | 48 | 42 | 175 | 82 | 85 | 90 | 87 |
| | BPS 5127 | 124 | 97 | 64 | 63 | 172 | 151 | 175 | 123 | 120 | 159 | 253 | 149 | 180 | 192 | 203 |
| | BPW 3110H | 158 | 120 | 70 | 52 | 263 | 204 | 230 | 168 | 165 | 203 | 530 | 151 | 203 | 250 | 251 |
| Retention of adhesiveness, % | | 95 | 96 | 95 | 97 | 89 | 90 | 97 | 100 | 100 | 100 | 97 | 92 | 90 | 88 | 83 |

A: completely cured, acceptable
B: slightly cloudy, acceptable
C: cloudy, unacceptable
D: uncured, unacceptable

CLAIMS:

1. A method for the preparation of a cured organopolysiloxane composition which comprises irradiating, with an electron beam, an organopolysiloxane composition comprising:
(a) 100 parts by weight of an organopolysiloxane having, in a molecule, at least one organosiloxane unit represented by the general unit formula $AR^1_nSiO_{(3-n)/2}$, in which A is an acrylic or methacrylic functional organic group having from 2 to 20 carbon atoms, $R^1$ is a monovalent hydrocarbon group having from 1 to 12 carbon atoms and n is zero, 1 or 2,
and
(b) from 0.5 to 50 parts by weight of an organohydrogenpolysiloxane having, in a molecule, at least one hydrogen atom directly bonded to the silicon atom.

2. A method for the preparation of a cured organopolysiloxane composition as claimed in claim 1, wherein the acrylic functional organic group represented by the symbol A is a group expressed by the formula $CH_2=CHCOOC_3H_6-$, $CH_2=CHCOOC_2H_4O-$ or $(CH_2=CHCOOCH_2)_3CCH_2O-$.

3. A method for the preparation of cured organopolysiloxane composition as claimed in claim 1 or claim 2 wherein the molar fraction of the organosiloxane units having the acrylic or methacrylic functional organic group in the organopolysiloxane is in the range from 0.1 to 30% by mole.

4. A method for the preparation of a cured organopolysiloxane composition as claimed in any one of the preceding claims wherein the organopolysiloxane as the component (a) has a viscosity in the range from 30 to 100,000 centipoise at 25°C.

5. A method for the preparation of a cured organopolysiloxane composition as claimed in any one of the preceding claims, wherein the amount of the organohydrogenpolysiloxane as the component (b) is sufficient to provide from 0.5 to 2 moles of hydrogen atoms directly bonded to the silicon atoms therein per mole of the acrylic or methacrylic functional organic groups in the component (a).

6. A method for the preparation of a cured organopolysiloxane composition as claimed in any one of the preceding claims, wherein the electron beam has an energy in the range from 50 to 1000 keV and/or the organopolysiloxane composition is irradiated with the electron beam in a dose in the range from 0.1 to 10 Mrads.

7. An uncured organopolysiloxane composition as defined in claim 1.

8. A method of providing a substrate with a release surface for adhesive, comprising coating the substrate with an uncured organopolysiloxane as defined in claim 1 and curing the organopolysiloxane with electron beam radiation, the organopolysiloxane preferably being as further defined in any one of claims 2 to 5 and/or the curing preferably being carried out by at least one of the preferred methods defined in claim 6.

9. A release sheet for temporary protection of adhesive surfaces, comprising a base sheet coated with a cured organopolysiloxane composition derived from an uncured organopolysiloxane composition as defined in any one of claims 1 to 5.

10. The use of an uncured organosiloxane composition as defined in any one of claims 1 to 5 as a precursor for a release coating, a protective coating, a decorative coating or a water repellant coating.